(19) **Europäisches Patentamt / European Patent Office / Office européen des brevets**

(11) **EP 1 965 313 A1**

(12) **EUROPEAN PATENT APPLICATION**

(43) Date of publication:
**03.09.2008 Bulletin 2008/36**

(51) Int Cl.:
**G06F 17/30** (2006.01)

(21) Application number: **06255593.3**

(22) Date of filing: **31.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **British Telecommunications Public Limited Company London EC1A 7AJ (GB)**

(72) Inventor: **The designation of the inventor has not yet been filed**

(74) Representative: **Williamson, Simeon Paul et al BT Group Legal Intellectual Property Department PP C5A BT Centre 81 Newgate Street London EC1A 7AJ (GB)**

(54) **Data processing**

(57)    An interface device for interfacing between one or more underlying data resources comprising a plurality of electronic data files arranged in accordance with a common format such as XML and an ontology based processing system, the interface device including storage means (144) for storing one or more mappings between meta data tag names associated with the XML data files of the underlying data resource and corresponding concept and/or attribute names used in the ontology based data processing system. The interface device further comprising a dictionary store (145) storing a set of dictionary data comprising a one to many set of mappings in which at least one record maps a single concept or attribute name of an ontology used in the ontology based data processing system to a plurality of element or attribute names of the underlying XML files and processing means (131) for comparing each type of XML file, or each XML schema file, with the dictionary data to generate a corresponding mapping in respect of each type of XML file.

Figure 6

**Description**

**Field of the Invention**

The present invention relates to a method of, and apparatus for, data processing. In particular, the present invention relates to a method of processing data from a plurality of heterogeneous data sources to provide an improved user interface for accessing the underlying data.

**Background to the Invention**

There is a generally recognised problem often referred to as data overload and information poverty. This refers to the fact that although there is a vast amount of data stored in databases throughout the world at the present time, accessing and processing the data from various different databases, even where the are linked together by an appropriate data network, in order to obtain useful information from the databases is not straightforward. This is because the data tends to be stored in many different formats and in order to process the data appropriately (e.g. to combine data from different databases) considerable knowledge about the format of the data is required. (Note, the term database is used here loosely to refer to any type of electronically accessible storage of data, whether it be in a well structured format such as in a relational database or an object-oriented database, a semi-structured format such as a store of extensible Markup Language (XML) documents or in an unstructured form such as a plurality of electronic text document files, image files, video files, Hyper Text Markup Language (HTML) or other types of computer files, etc. The term database may be used interchangeably with the term "data source" throughout this document).

There has been much research into this area. A paper by Patrick Ziegler and Klaus R. Dittrich (2004) entitled "Three Decades of Data Integration - All Problems Solved?" published in the proceedings of the World Computer Congress 2004 - WCC 2004, 3-12, provides a good overview of research into this field and explains how there are many different architectural levels at which integration between heterogeneous data sources may be attempted. For example, at the lowest level it may be attempted by combining the data at the data storage level - this involves migrating the data from a plurality of separate data sources to a single database with a single interface for querying the database. Towards the other extreme, a user could be provided with a common user interface, but the underlying data remains transparently located in separate databases and the user must combine the information from the different databases him/herself.

The present applicant has previously developed a data integration system and methodology described in International published patent application: WO 02/080028. In this system, the heterogeneous data sources to be combined are maintained as separate databases and a series of wrappers are used to interface between the databases themselves and the system. The wrappers also translate or map queries expressed in a "resource" ontology to the query language/schema supported by the underlying resource (i.e. the underlying database). The system then maps between the resource ontology and a global ontology or an application specific ontology which the user uses to formulate global queries. Note that in this system, as in other systems of which the Applicant is aware, the system always seeks to integrate as many of the useful underlying heterogeneous data sources as possible.

**Summary of the Invention**

According to a first aspect of the present invention, there is provided a system for processing data comprising: a resource interface for interfacing to a plurality of underlying resources; integration means and a user interface; wherein the user interface is operable in use to permit a user to view all of the underlying resources currently accessible to the system and to select a plurality of these to form a subset comprising some, but not all, of the underlying resources from which to form an integrated view of the sub-set; and wherein the integration means includes means for determining how to join the data from the underlying resources to identify an integrated view for the selected sub-set of underlying resources and passing this to the user interface for display to the user.

This provides a system over which the user has much greater control than has previously been possible. In particular, the present inventors have established that users often have a good understanding of the nature of the various resources available to them (often including various details about the resources which are unlikely to be known to an information technology specialist who may be responsible for performing data integration within an organisation, such as the operators involved in compiling the data, the length of time over which the data was compiled, the general level of perceived accuracy of the data in the resource, etc.) and are therefore in a good position to decide which databases are best suited to assisting the user in any particular task that he wants to perform.

Providing them with the option of doing this can therefore result in a much more powerful system from the user's perspective.

Inherent in providing such a system, however, is the need for the system to be able to generate views of the selected databases on-the-fly. Furthermore, the views should be as integrated as possible, in the sense that where it is possible to join the data of the underlying resources, the view presented to the user should be one which shows the resources as already joined. Since this cannot be performed at design time, but rather must be performed at run-time, some heuristics are needed to guide the system as to the best possible way of performing such joins. Clearly where there is only one possible way of performing the join there is no issue (although the question of how best to present the view to the user remains - this is discussed in greater detail below), but the system needs a mechanism for deciding how best to perform a join when there are multiple possibilities.

Therefore, the integration means of the system preferably includes storage means for storing meta-data about each of the underlying resources for use in identifying an integrated view. Preferably the meta-data includes quality meta-data indicative of the perceived quality of the corresponding resource. This meta-data can then be used to help the system decide, on-the-fly, how best to perform a join when multiple possibilities exist.

Preferably the integration means is operable to generate a strategy for accessing underlying data from one or more of the underlying resources in response to a request for such data from the user and provide this to the user. Preferably, where a plurality of viable strategies exist for answering a user query, the integration means is operable to select one of the viable strategies in dependence upon the quality meta-data associated with each of the underlying resources.

In order to form an integrated view for presentation to the user, the system preferably operates in the following way: -

- It stores mappings between the underlying resources and a user ontology (there could be a number of these or there could be just one standard user ontology for use by the organisation as a whole, etc). Preferably, the system includes a mapping editor utility for assisting operators (either users or more technical IT staff) in producing such mappings and this is discussed in a little detail below.
- For each of the selected resources, the mapping is used to identify which concepts in the user ontology are covered by the resources.
- The system tries to integrate the resources into as few groups as possible (e.g. if three resources are selected and they can all be joined together (possibly via a non-selected resource), then just one group is formed; if the first and second resource can be joined but the third cannot, then two groups are formed.
- For each group a pruned ontology is formed by pruning the user ontology to remove any concepts not covered by any of the resources in the group.
- The or each pruned user ontology is then presented in a window in a tree-structure (similar to that used in many file-manager programs such as Microsoft's (Registered Trade Mark) "Explorer" file manager program, etc.), which the user can navigate through by double-clicking on individual nodes to open up any sub-nodes depending therefrom etc.
- In one embodiment, each resource is associated with a main concept of the user ontology and each of these main concepts forms a starting point for a sub-tree formed down from the or each starting point. For example, suppose a user has selected the following three resources from which to form an integrated view: a customer database, an order database and a product database, which are associated with the following three concepts from the user ontology as the respective main concepts for these resources: customer, sales-order, product. An integrated view is presented to the user with the concept from the user ontology "Thing" as the root node, containing three sub-nodes, "customer", "sales-order", "product" only one of these is expanded (preferably the main concept of the first selected resource - i.e. "customer") but underneath each are the various sub-concepts which constitute attributes or sub-attributes of these concepts (e.g. "customer" may have attributes name, address, telephone number, orders made, products bought, etc.).

Preferably the system is operable to utilise underlying resources which include at least:

- Structured databases such as relational databases and object-oriented databases
- Collections of structured documents such as extensible Markup Language (XML) documents.

In the case of collections of XML documents (or similar documents containing tagged or marked-up data) the mapping information preferably maps concepts in the user ontology to meta-data (e.g. element and attribute names) contained in the XML documents. The mapping data also preferably specifies which parts of each type of XML document (as specified by a corresponding Document Type Definition (DTD) or XML Schema) can be used for the purpose of joining to another type of XML document or to another resource in general (which need not be an XML or similar document).

Preferably, the integrated view presented to the user includes at least two distinct areas on the screen (realised, for example, by providing separate windows or frames), one of which displays only concepts contained in the pruned user ontology (or ontologies), and one of which displays data obtained from the underlying data resources. The latter window or frame (hereinafter the "results window") is preferably filled in dependence upon a combination of constraints or search queries entered by the user in combination with the highlighting of nodes in the former window or frame (hereinafter the "ontology window"). Preferably, a third area (i.e. a window or frame) (hereinafter the "query window") is used to specify a query which may conveniently be expressed in a Structured Query Language (SQL) or XQuery type format. Preferably, highlighting performed by the user in the ontology window can be interpreted by the system as an SQL or XQuery query which is then automatically produced and displayed in the query window. For example, highlighting the concept customer in the ontology window, could cause the system to display all of the records stored in the selected underlying resource "customer database". At the same time the SQL-type instruction for causing this data to be displayed would also be generated and placed in the query window (e.g. "SELECT * FROM customer"). Each window can be manipulated by the user and will cause corresponding changes to be made to the other windows as appropriate. For example, selecting a particular customer name as displayed in the results window could cause the name sub-concept to become highlighted in the ontology window, and for the query window to be changed, e.g. to read:

```
SELECT * FROM customer
WHERE customer.name = "John Smith"
```

or similar.

According to a second aspect of the present invention, there is provided an interface device for interfacing between one or more underlying data resources comprising a plurality of electronic data files arranged in accordance with a common format (e.g. XML files) and processing system, the interface device including storage means for storing one or more mappings between meta data tag names (e.g. element and attribute names of a respective XML file or group of files conforming to a common format) and corresponding meta data or tag names used in the data processing system.

Preferably, the data processing system is an ontology based data processing system and the storage means stores mappings between meta data tag names (e.g. element and attribute names of a respective XML file or group of files conforming to a common format) associated with the underlying data resource and concept or attribute names of an ontology used in the ontology based data processing system.

Reference to a plurality of electronic data files conforming to a common format includes groups of XML files all corresponding to a particular XML schema file or DTD file or other similar file specifying a required format for a particular grouping of XML files.

Preferably the interface device includes an arrangement for conveniently generating a plurality of mappings for mapping between a plurality of types of electronic data files (e.g. XML files) and a common ontology, the arrangement including a store for storing a set of dictionary data comprising a one to many set of mappings in which at least one record maps a single concept or attribute of the ontology to a plurality of meta data tag names (e.g. element and/or attribute names of the XML files, schemas or DTD's) a store for storing a plurality of electronic data files of different types and/or information about the differing formats of the plurality of electronic data files of different types (e.g. XML files of different types or XML schema files) and processing means for comparing each type of electronic data file (e.g. each type of XML file), or each file describing format information about a respective type of electronic data file (e.g. each corresponding XML Schema), with the dictionary data to generate a corresponding mapping in respect of each type of electronic data file.

Further aspects of the present invention provide corresponding methods of interfacing to a plurality of heterogeneous resources, computer programs for causing such methods to be carried out and carrier means carrying such computer programs.

**Brief Description of the Drawings**

In order that the present invention may be better understood, embodiments thereof will now be described, by way of example only, with reference to the accompanying drawings in which:

Figure 1 is a block diagram illustrating in overview a system for interfacing between a user and a number of heterogeneous data resources according to the present invention;

Figure 2 is a mapping diagram illustrating a mapping between concepts of a user ontology and columns of a table in a relational database;

Figure 3 is another mapping diagram illustrating a mapping between concepts of a user ontology and columns of a table in a relational database;

Figure 4 is yet another mapping diagram illustrating a mapping between concepts of a user ontology and columns of a table in a relational database;

Figure 5 is a schematic drawing illustrating how a foreign key connection between two tables in a data resource can be used to join the tables; and

Figure 6 is a block diagram of an arrangement for producing mappings between XML files and/or formats and an ontology.

**Detailed Description**

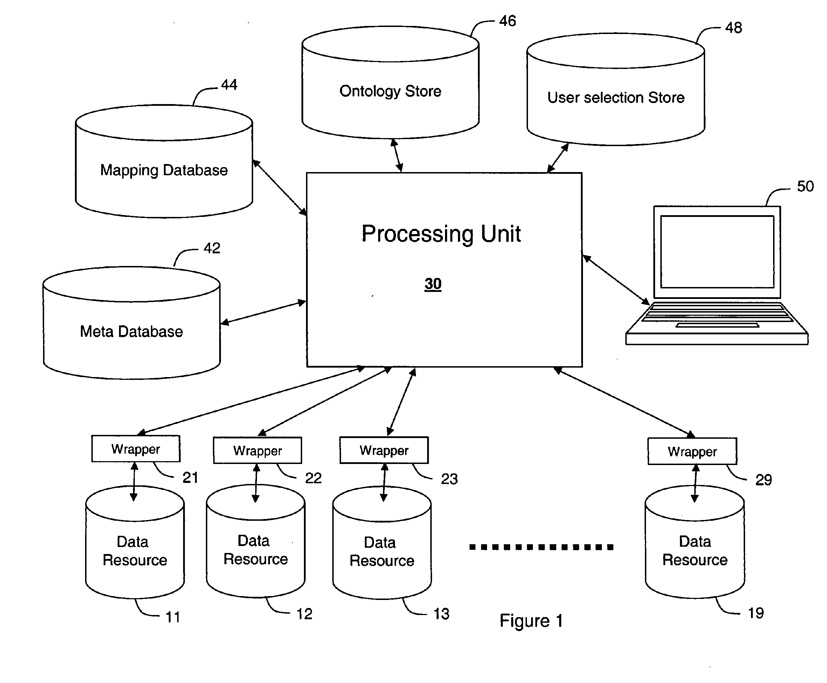

Figure 1 illustrates some of the main components of the interface system of an embodiment of the present invention. The interface system (21-29, 30, 42, 44, 46, 48) interfaces between a plurality of (heterogeneous) data resources 11, 12, 13, ..., 19, and a user terminal 50.

The interface system includes a plurality of wrappers 21, 22, 23, ..., 29 each of which connects to a respective corresponding data resource 11, 12, 13, ..., 19; the wrappers interface between the interface system (which is largely ontology based) and the respective data resource (having a native query/response format for accessing data stored in the resource) in a manner discussed in greater detail below.

The wrappers 21, 22, 23, ..., 29 communicate with a Processing Unit 30; the processing unit performs the data manipulation associated with the present invention and this is described in greater detail below.

Information used by the processing unit 30 is stored in various data stores to which it has access, namely a Meta Database store 42 which stores various information about each of the Data Resources 11 - 19; a Mapping Database store which stores mapping information for mapping between resource ontologies used by each of the wrappers and a central ontology and/or multiple user ontologies, and/or information for mapping between meta data of the underlying resources (e.g. database schemas, XML schemas, etc.) and either corresponding resource ontologies or directly to a common central ontology and/or multiple user ontologies; an Ontology Store 46 which stores a number of ontologies, including the resource ontologies and a central ontology and/or one or more user ontologies; and a User Selection Store 48 which stores details about a particular user session, including the set of selected resources for use in the session.

Finally, the interface system is able to communicate with an end user terminal 50; in one convenient embodiment the interface system is a server based system and the system communicates with the end user terminal 50 via Hyper Text Transfer Protocol (i.e. the interface system is a web server and the end user is a web client).

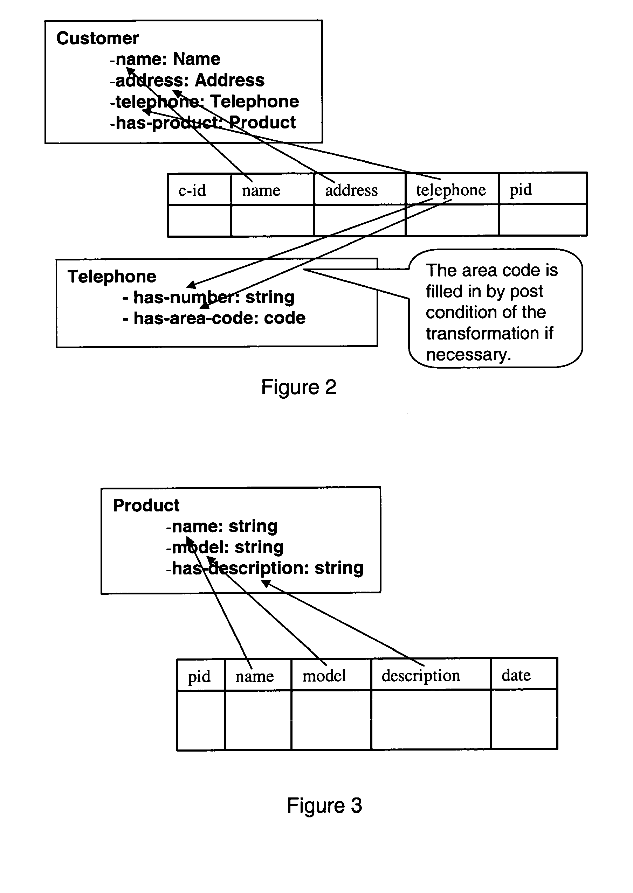

Referring now to Figures 2, 3 and 4, some examples will now be given of the type of data which may be stored in the underlying data resources (21-29), and in the Meta Database 42, the Mapping Database 44 and the Ontology Store 46.

**Meta Database 42**

The Meta Database 42 can be considered as a sort of semantic repository for storing the necessary metadata to enable plug and play of the underlying data resources and on-demand fusion of any of the underlying data resources when selected by a user. The Meta data stored for these purposes also includes quality data indicating a perceived level of the general quality of the data stored in a particular resource. This could simply be entered by a user or it could be at least partially produced by automated data quality assessment modules.

As an example, the Meta Database could include the following database tables:

Data-source-metadata

| data-source-id | url | owner | creation-date | update-date | context-id |
|---|---|---|---|---|---|
| | | | | | |

Context-data

| context-id | context | applications | update-date | status | type |
|---|---|---|---|---|---|
| | | | | | |

In the present example, the context column contains a description of the business area where the data are used for. This could be a concept from a "context ontology" or any standard classification schema.

The applications column contains a list of applications where this data source has been used.

The update-date is the date the last time this entry has been updated.

The status column can take one of two possible values: active or inactive. These specify whether the underlying resource is currently available to the system (in case, for example, a network problem has caused the underlying resource to become temporarily unavailable.

The type column specifies the type of the underlying resource, e.g. data warehouse, transaction database, operational data store and others.

Data-source-quality.

| data-resource-id | table-name | column-name | quality | quality-table-name |
|---|---|---|---|---|
|  |  |  |  |  |

The above table (Data-source-quality) is for storing data quality information about each underlying data resource. The data-resource-id column contains a foreign key to the main data-source meta data table above; the table-name column contains the name of an individual table in the data resource (where the data resource is in the form of a relational database); the column name contains the name of an individual column of an individual table in the data resource; and the quality column contains a number indicative of the perceived level of quality of the respective column, ranging between 0 and 100 (where 0 means the data is completely unreliable and 100 means the data is completely reliable). The quality-table-name column contains a foreign key in the form of the name of a data-quality-details table where more details of the data quality may be found, if such a table is present. Where such a table is present, it may detail information such as whether or not the quality measure has been arrived at in an automated fashion or manually, and if in an automated fashion by what method (e.g. using a format based manually supplied filter, or using an automatic classifier such as a neural network, etc.)

There are other tables for storing user details, access rights, etc. However these are not used in the detailed technical descriptions below since an understanding of these tables is not necessary to achieving an understanding of the present invention.

**Mapping Database**

The Mapping Database stores data specifying mappings between different ontologies and between ontologies and schema (or other descriptions of) the underlying data resources. In the present embodiment, these mappings are stored in the form of several types of relational database tables as described below:

data-source-business-view

| data-resource-id | ontology-name | mapping-details table name |
|---|---|---|
|  |  |  |

The above data-source-business-view table stores an id of each data resource, the name of an ontology used to describe the contents of that data resource in the ontology based part of the interface system and the name of a mapping-details table where the detailed mappings of the database schema of the resource to the ontology are specified.

mapping-details table

| table-name | Column- name | concept-name | attribute-name | Transformation-id |
|---|---|---|---|---|
|  |  |  |  |  |

Note that in the present embodiment, there is a separate mapping-details table for each underlying data resource and each table may be stored in either or both of a corresponding wrapper and/or in the mapping database. The above mapping-details table is an example of a mapping between a relational database and an ontology (note an example of a mapping between an XML schema and an ontology is given below). Each row of the mapping-details table specifies a mapping between a column name of the relational database table and a concept or attribute of the ontology. As in the data-source-quality table, the table-name and column-name columns give the names of the table and column respectively for which a mapping is to be specified by the row. The concept name column holds the name of the concept to which the column of the data resource is to be mapped within the ontology (if it is mapped to a concept) while the attribute column holds the name of the attribute of the ontology to which the column (of the resource) is to be mapped (if it's mapped to an attribute of the ontology). The transformation-id is a foreign key which can be used to find the details of the transformation of the mapping from the transformation table shown below.

transformation

| transformation-id | Expression |
|---|---|
|  |  |

The expression column stores the details of the transformation (where one is required to correctly map between the column of the resource and the concept or attribute of the ontology). The transformation-id is the primary key of this table.

**Data source mappings**

This section outlines some of the details of mappings between an ontology and data resource tables, using as examples a small portion of a simple ontology and a small number of relational database tables.

Ontology

Details of ontology definitions and uses are omitted here. This has been outlined in many public resources. For a discussion of a similar ontology processing system for integrating multiple heterogeneous data resources, see in particular copending International published patent application No. WO02/080026

Example Ontology

For the following discussion of certain technical details of the ontology to data resource mappings used in the present system, it is assumed that the ontology contains the following concepts and attributes:

| **Customer** | (concept) |
|---|---|
| - **name: Name** | (attribute) |
| - **address: Address** | (attribute) |
| - **telephone: Telephone** | (attribute) |
| - **has-product: Product** | (attribute) |

| **Product** | (concept) |
|---|---|
| - **name: string** | (attribute) |
| - **model: string** | (attribute) |
| - **has-description: string** | (attribute) |

| **Price** | (concept) |
|---|---|
| - **amount: real** | (attribute) |
| - **currency-type: string** | (attribute) |

| **Order** | (concept) |
|---|---|
| - **has-product: Product** | (attribute) |
| - **has-customer: Customer** | (attribute) |
| - **has-price: Price** | (attribute) |
| - **date: string** | (attribute) |

(continued)

| Telephone | (concept) |
|---|---|
| - **has-number: string** | (attribute) |
| - **has-area-code: Code** | (attribute) |
| | |
| **Address** | (concept) |
| - **part-one: string** | (attribute) |
| - **has-post-code: Code** | (attribute) |

We have not included other concepts of the ontology and have not given any hierarchy of these concepts because they are not relevant to the present discussion of the system. Note however that some of the attributes point to other concepts of the ontology (e.g. the attribute has-customer (an attribute of the Order concept) points to the Customer concept, etc.).

**Tables**

The present example assumes that the underlying resources contain the following relational database tables. Please note these tables could be from the same database or from different databases and possibly even from totally separate data resources. In terms of notation, a tabular form is used in this document to indicate database tables, as opposed to ontology concepts. Furthermore, for the sake of clarity attribute types have been omitted except where relevant to understanding the present invention.

Customer-details

| c-id | name | address | telephone | Pid |
|---|---|---|---|---|
| | | | | |

Customer-id is the primary key of the Customer-details table.
pid is a foreign key to the product-details table. The other columns are self-explanatory.

Product-details

| pid | name | model | description | Date |
|---|---|---|---|---|
| | | | | |

pid is the primary key of the Product-details table, the other columns are again self-explanatory.

Order

| o-id | c-id | p-id | cost | date |
|---|---|---|---|---|
| | | | | |

o-id is the primary key of the Order table, c-id and p-id are foreign keys and the other columns are self-explanatory.

**Mappings**

Instead of populating the mapping tables detailed in the discussion of the Mappings database given above, Figures 2-4 use a graphical format to display the mappings for ease of comprehension. Please note the actual algorithms have to retrieve these mappings from the mapping tables. Please also note that we will use tabular forms to represent tables from databases in order to distinguish them from ontology concepts. The following tables could be from one single database or from multiple databases. Where they are coming from are clear in the context or clearly noted.

So, referring to Figure 2, it is clear that the column "name" in the customer-details table is mapped to the attribute "name" of the "Customer" concept in the ontology. Similarly, the "address" column is mapped to the address attribute of the Customer concept. Note that the address attribute refers to the Address concept of the ontology (in general a notation is used in which concepts commence with a capital letter, while attributes do not - also, when the type is a simple type such as integer, string, floating point number, etc rather than a reference to a concept in the ontology, it also commences with a small letter); the mapping from the "address" column to the Address concept can therefore be thought of as a conceptual mapping since the actual values stored in the column cannot be mapped directly to the Address concept because individual items of data can only be stored as attributes of a concept (having a specified type). - some sort of further mapping or else a type transformation is required to enable a sensible mapping from the "address" column to the underlying attributes of the Address concept. In the present example, further mappings are specified which map the "address" column to each of the attributes of the Address concept (in the present example these are just part-one and has-post-code, but naturally different ontologies could have different Address concepts having details such as street name and number, town, area, country, etc.) however, these are not illustrated.

It is further clear from Figure 2 that the "telephone" column in the customer details table is mapped conceptually to the Telephone concept in the ontology. It is further illustrated in Figure 2 that there are then further mappings from the column "telephone" to the two attributes of the Telephone concept, namely the has-number attribute (which is a string) and the has-area-code attribute which is of type Code (a concept of the Ontology used for storing codes which are required to have a predictable format, e.g. UK telephone area codes should begin with a zero and comprise either 3, 4 or 5 digits in total). If we assume that telephone numbers are normally stored in the customer details table as strings including both the area code and the actual telephone number, then some logic is required to map this combined info into the two separate attributes of the Telephone concept - depending on the variability of how the number is written in the customer details table this may require little or considerable complexity as will be appreciated by the skilled reader).

Also note that the columns which contain the primary and foreign keys (i.e. the "c-id" column and the "pid" column) are not mapped because there are no corresponding attributes for these in the ontology of the present example.

Figure 3 shows a very straightforward mapping of three columns of the product-details table to the three attributes (name, model and has-description) of the Product concept of the ontology. As in Figure 2, the primary key column "pid" is not mapped to anything in the ontology since there is no corresponding attribute in the ontology of the present example to map it to. Similarly, there is no corresponding attribute in the ontology to which to map the "date" column, so this also remains unmapped.

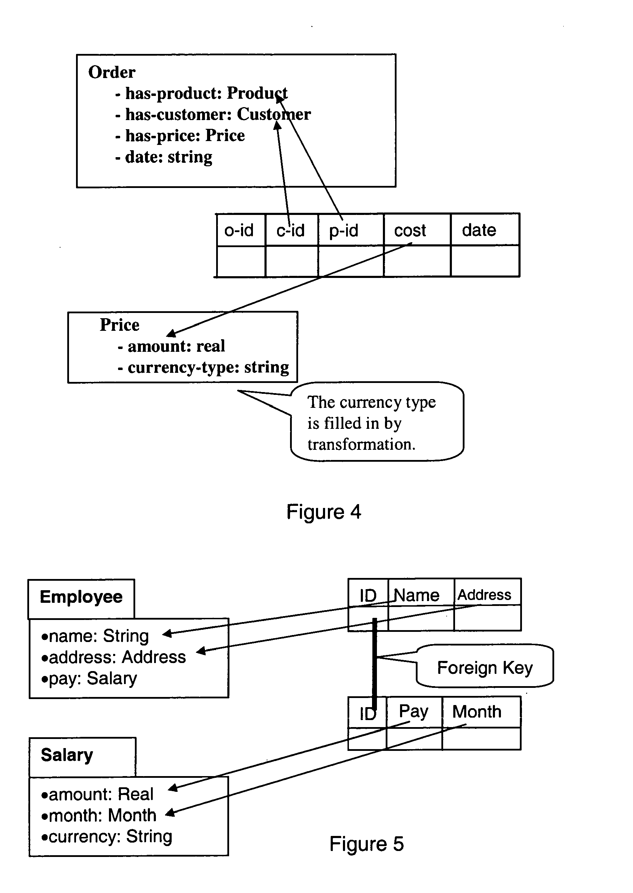

Figure 4 shows another mapping between a table and ontology concepts/attributes. Note that in this case the foreign key columns "p-id" and "c-id" are mapped to attributes in the ontology, since the Order concept has appropriate attributes, has-product and has-customer respectively, to which these may be mapped. Note that from the foreign keys the system is able to obtain the necessary product and customer information in order to provide the relevant details for the referenced product/customer if necessary. Also note that the cost column is mapped to the amount attribute of the ontology concept Price. There is no mapping between the currency-type attribute of the Price concept, since in this case this information is not stored explicitly in the relational database - rather it is implicit that the cost is in the currency of the country in which the company, whose database this is, operates - i.e. UK pounds sterling; this value is therefore filled in automatically be a transformation (i.e. in the mapping details table the column-name column entry for the respective row is empty but the concept name contains the concept Price and the "attribute" column contains the attribute currency-type and a transformation-id is placed in the "transformation-id" column which links via the transformation table to an expression which simply sets the currency type to UK pounds sterling for all entries from the order table.

**The Fusion Algorithm**

This section details the algorithms used to support the on-demand data fusion with real-time data quality.

Business users interact with the system through a Graphical User Interface (GUI). The interface includes a GUI representation of the semantic repository which contains all available data sources (i.e. the underlying data resources). Each data source is represented by an icon in the interface. Through right mouse-clicks on data sources, there are a number of things available to the business user to make the selection of appropriate data easier. The business user can view the data source contents through its business view, ie. the contents are described by an ontology (this is described in greater detail below); examine their metadata such as their owners and context data as given in the data-source-metadata and context data tables; view data quality profiles such as accuracy of columns and missing values; and view actual data source contents (i.e. view the actual schema or other native data description provided by the underlying data resource).

After examining these, the business user can drag and drop appropriate data sources to the selected data source pane. The integrated business view will be automatically updated when data sources in the selected data source pane change. The business users can unselect any data source in the selected data source pane if they see a better replacement data source in the semantic repository.

The integrated business view is a unified view of all the data sources in the selected data source pane. Thus it acts as a virtual data warehouse. Users or applications can query the selected data sources through the unified view. The system will automatically retrieve any relevant data from individual data sources and fuse the results and present the final results in terms of the unified business view to the users or the applications.

**Business view for individual data sources**

The business view of an individual data source is computed by its associated ontology and the mappings in the Mapping database and/or in individual wrappers.

The system computes the business view by pruning its associated ontology by removing concepts and nodes from the full ontology based on mappings available in the mapping tables.

The following logic is used in the present embodiment to perform the pruning of the ontology:

• call the MappingDB getMappings function to get a vector of 2 vectors, one for the concept names and other for the attribute names for which mapping from the data sources to the ontology exists.
• Get handle 'onts' to vector of concept names
• Get handle 'atts' to vector of attribute names
• Obtain an iterator 'classes' to the OntClasses in the OntModel
• Convert iterator into vector 'clists' of OntClass
• Get an enumerator for the vector 'ccc' of OntClass
• For each OntClass object in 'ccc' call keepNodes(ontClass, onts, atts, dels) to remove unmapped attributes from concept and add the unmapped concepts(i.e. concepts where no attributes or subclasses are mapped to selected datasources) to dels vector;
• Removed all unmapped concepts from Model by iterating through the dels vector.

KeepNodes

This function would behave as following when given a particular concept, list of concepts from mappingDB, list of attributes from mappingDB and a vector delS( to hold the concept in-case it needs to be deleted)

1. returns true when at least 1 property of the concept is present in the list of attributes
2. returns false for a concept when NO properties, of the concept or its subclasses, are present in the list of attributes
3. when the function returns false, the concept is added to dels vector (for deletion later)
4. when the function returns true

i. all attributes of the concept that were not available in the attribute list are removed from the concept
ii. any superclasses of the concept not initially available in the list of concepts are added to the list of concepts

```
if (kNodes.contains(c)) {
  return true;
}
```

Logic as follows:

• for the concept(also known as class) determine the property list(also known as attribute list)
• for each attribute of concept

o if attribute exists in attribute list , set flag to true
o if attribute does not exists in attribute list, delete attribute from model

• if flag is true(i.e. the concept has mapped attributes)

o determine the list of superclasses of the concept

o for each superclass

□ add superclass to list of concepts (vector) if it is also not present
□ return true

# Note: the following part is executed only when the flag is set to false because the
# function would have returned true if the flag were set to true
• determine the list of subclasses of the concept
• for each subclass

o make a callback to keepNodes to determine if either the subclass or any of the subclasses of the subclass has a mapped attribute (recursive call till the leaf level class is reached)
o if keepNodes returns true, set flag to true and break(i.e. break recursive call when the first mapped attribute for a subclass is found)

• if flag is true return true,
• else if list of concepts to be deleted does not contain this concept

o add to list
o return false

**Integrated business view of all selected data sources**

The unified business view of all selected data sources is computed according to an algorithm similar to the above algorithm for a single data source. The only difference is that instead of examining one data source mapping, it will look through all mappings of the selected data sources.

**Processing queries over the integrated business view**

The query composition in ontology is very similar to SQL on relations. We treat Concepts roughly like tables and the typed relation as a Foreign key relationship. The following are some example query types.

Customer

- name
- address
- product: Product

Product

- name
- model
- description

A query is then like: customer.name, customer.address, product.name, product.model from Product and Customer where customer.name = "Dave Brown"
The results of this query will be denormalised. In this query, we are looking at the relationship between Customer and Product.
A simple query could be: customer.name, customer.address from Customer.
We could have an Order concept as follows:

Order:

- pname
- cname
- date

A query could be like this:

Customer.name, product.name, date from Customer, Product and Order

When a query is composed by the users through highlighting nodes and attributes of the integrated business view and through filling in certain attribute values, it's translated into the form discussed above.

Upon receiving a query, the system first computes all the concepts and all attributes appearing in the query. These are then used to search the mapping database for mappings which map these concepts and attributes to the data sources present in the selected data source pane. This produces a list of data sources relevant to the query.

The concepts and attributes of the query are then partitioned into sets. Each set corresponds to one data source. All concepts and attributes in each set can be answered by the data source associated with the set.

After that the query is decomposed into sub-queries. Each sub-query can be answered by at least one data source. There are cases where more than one data source could answer a sub-query.

The answers from each sub-query are then fused to provide the final answer to the original query.

**Examples of the fusion algorithm in action**

To provide a better understanding of the above set out algorithm, various examples of the algorithm in operation are set out below.

**Example 1: processing a query using only one data source**

**Query:** select Customer.name, Customer.Telephone.has-area-code from Customer

Figure 2 illustrates mapping details required to answer this query. Note that when expressing a query using terms from the ontology, sub-concepts and attributes of concepts are specified using a dot notation which will be familiar to readers used to the notation employed in many object oriented programming languages such as Java - i.e. Customer.Telephone.has-area-code means the has-area-attribute of the Telephone sub-concept of the Customer concept. Since no specific values have been mentioned this query should obtain the customer name and telephone area code of every record in the customer table.

This query can be answered from the single database table illustrated in Figure 2. There are two mappings relevant to the query. For the customer name, it's straightforward to retrieve from the table through the name mapping. For the "has-area-code" attribute, this uses the mapping from column "telephone", of the Customer-details table, to the has-area-code attribute of the ontology concept Telephone, in combination with any transformation expression required to obtain the desired area code from the telephone number stored in the table.

After examining the two mappings, we know the query can be answered from one data source. Furthermore the two relevant mappings map to a single table. This means that this query can be answered from one table. As the Customer.name and Customer.Telephone.has-area-code are mapped to one table, the answers for each pair of Customer.name and Customer.Telephone.has-area-code have to correspond to each record. To understand this, we must understand that from the algorithm point of view, the two values from the two mappings have to be joined together. As the two values from the same table, they must correspond to the original association. If a customer A has telephone number 605682 and the mapping fills in the area code 01473, then the area-code for customer A has to be 01473. If a customer B has telephone number 605682 and the mapping fills in the area-code 01206, then B must have area-code 01206. Any other joins would be invalid.

If mappings map concepts and attributes to one single database table, each record retrieved must be from a single record from the table.

**Example 2: processing a query using more than one data sources**

Let's assume the query is the same above Example 1 but that now there are two selected data resources both of which contain a table which could answer the query.

The processing is similar to the algorithm outlined in Example 1. However, this time any duplicate records will be removed. In case there are conflicting records, the system would choose a record according to the data source quality. The table having a better data quality profile would take priority. When the data quality profiles are the same, an arbitrary one will be returned. In any case, the final results will be highlighted to signal that the system has made a selection and detailing what that selection was.

**Example 3: processing a query through joins**

Query: select Order.Product.name, Order.Customer.name, Order.Price.amount from Order

Figure 4 shows the mapping details relevant to the above query.

In this example we again assume that the tables exist in a single underlying data resource. Had there been multiple possible tables, etc, the conflict resolution would have been performed in the same way as described above with reference to Example 2.

Order.Product.name

From the Order concept, it is apparent that the has-product attribute is of type Product which is a concept in the ontology. The system therefore looks for a mapping to the Product concept in the Mapping Database (or in the wrapper). If the system can not find any mappings to the Product concept, then the query returns null results.

If it finds a Product mapping, but (as in the present case) finds that Product is mapped to a different table from that to which the Order concept is mapped - i.e. the concept Product is mapped to the Product-details table while the concept Order is mapped to the Order table), then since the Order.has-product attribute is mapped to p-id, the system assumes (correctly) that this field can be used to join with the table (i.e. the Product-details table) to which the concept Product is mapped. Thus, to summarise, if the system finds a foreign key relationship, the two tables are joined through this foreign key relationship. If the two tables have no directly linking foreign key relationships, the system will look through all tables in the same database, if it finds a foreign key relationship path, then the two tables will be joined through the path. If there are more than two paths, the system will choose one according to the rules given in a knowledge base if one exists (this may conveniently be stored as part of the Meta Database) or otherwise based on quality information about the quality of the various tables and or individual columns within the tables to be used in the joining..

The knowledge base, if present, contains the business rules which describe valid joins. The business rules are given by system administrators or automatically learned through text mining techniques. As this patent does not cover this aspect, the details are not given. But there are many text mining techniques which could be used for this purpose.

**Join through implicit keys**

In the above examples, the keys are all explicitly mentioned through the mappings. There are cases where the necessary keys for performing joining are not explicitly referred to anywhere in the mappings. An example is shown in Figure 5. The Employee concept is mapped to one table and the Salary concept is mapped to another. Then the following is a valid query.

Query: select Employee.name, Employee.Salary.month, Employee.Salary.amount from Employee and Salary

As the query needs to join Employee and Salary and they have mapped to different tables, the system would look at how to join the two tables in the database. The order list for joining is as follows:

1. Foreign key relation between the two tables.
2. If there is not a direct foreign key and the two tables are from the same database, look for alternative or candidate keys for a direct join as declared in the database dictionary, if present.
3. If step 2 could not find any alternative or candidate keys, look at the knowledge base, if present, to see whether there is any join key information given there.
4. If step 3 fails, calculate an indirect transitive join path as outlined in the previous example.
5. If step 4 fails, the system will go through the semantic key step as outlined in the next section. The semantic key also applies to tables from different databases.

Note that the data base dictionary (sometimes also referred to as a data dictionary) is a data structure often provided in underlying data resources which may specify a large amount of information about the data contained in the resource, including information about how different tables may be joined together.

**Semantic Key**

The semantic key procedure is used to find semantic join keys when the system can not find any other ways to join two tables. When two tables are from two different databases, the system always goes through the semantic key process.

The order of semantic join key finding is as follows:

1. Search through the knowledge base for any joining information. If a key is found, use it to join the two tables.

2. If step1 fails, examine the ontology. If the two tables each have an attribute mapped to the same ontology concept attribute, then they will be used as a join key.

3. Otherwise it will compute attribute correspondences. Each correspondence will have a probability score. A weight sum of the score is used to determine whether two records should be joined or not. When the weighted some is over a certain threshold, the two records will be joined.

The details of the algorithm associated with step 3 are set out in co-pending International published patent application WO 06103398 the contents of which are hereby incorporated by reference.

## Fusing sub-query results

Where a large query has been split by the processing unit into a plurality of separate subqueries (often to go to different underlying data resources) the sub-query results all carry information of the corresponding data resource and data table names. The join keys for joining these sub-query results are calculated through the semantic key process as outlined above.

## Dealing with XML Repositories

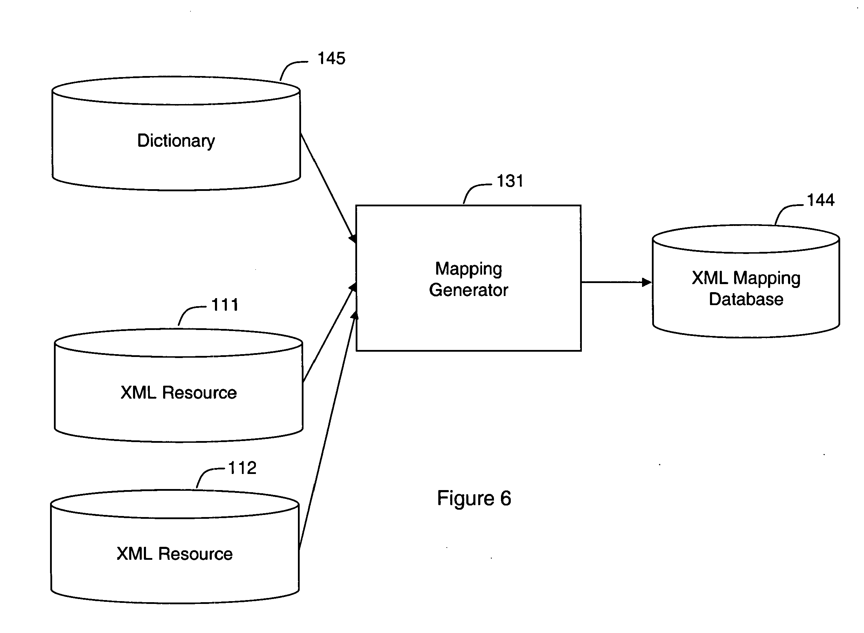

The present embodiment includes a few features which are specific to dealing with underlying data resources which are comprised of XML repositories and these will now be discussed with reference to Figure 6.

The over-riding principle of operation is the same, however it is advantageous to provide a few additional functionalities for dealing with XML repositories specifically. One such functionality is the ability to use XQuery as the querying language instead of an SQL type query language, since XQuery provides richer features for use with XML repositories as well as being applicable to relational databases.

Furthermore, the mappings between an ontology and XML schema (or similar), in the present embodiment, map between ontology concepts and/or attributes and XML element and/or attribute names. The manner in which he mappings are generated in the present embodiment is described below with reference to Figure 6. A Dictionary store 145 stores a dictionary which is maintained by an administrator or business user. The dictionary store may conveniently be formed as part of the Mapping Database 44. The Dictionary store 145 specifies any words which appear in the XML documents of the underlying data resources which are the names of XML elements or attributes which map across to a corresponding concept or attribute of the ontology. Whenever the dictionary is updated, the user/administrator has the option to regenerate a mapping in respect of any of the underlying data resources which are XML repositories. When this is done, the dictionary is processed by the Mapping generator 131 together with an XML schema provided by the selected underlying XML resource (111 or 112). (Note that the Mapping generator 131 may conveniently be formed as part of the processing unit 30.) From this information the dictionary is compared with the XML schema and a mapping is generated which is specific to the respective underlying resource and this is stored in an XML Mapping Database 144 (which may conveniently form part of the Mapping Database 44).

In the present embodiment the dictionary is provided using a simple language with a construct such as:

word → [list of words that each conveys the semantically equivalent meaning] as an example consider the following dictionary, a **\*.map** file:

title → [titre]
surname → [lastName, nom]
DateOfBirth → [DateDeNaissance]
maritalStatus → [etatCivil]
firstname → [forename, christianName, prenom]
city → [town, ville]

The syntax of which can be defined in following manner:

$$T \quad \rightarrow \quad \left( E \right)^{*}$$

$$E \quad \to \quad V'' \to '' S$$

$$V \quad \to \quad \langle ID \rangle$$

$$S \quad \to \quad \left[ \dot{\delta}(,\dot{\delta})^* \right]$$

$$\delta \quad \to \quad \langle ID \rangle$$

Which, as a reader familiar with this notation will appreciate means that the dictionary or Thesauraus (T) comprises one or more statements or Elements (E), each of which takes the form of a first thing (V) followed by an arrow which in turn is followed by a second thing (S). The first thing (V) comprises exactly one string value (<ID>) while the second thing (S) comprises one or more sub-things (δ) each of which is separated by a comma and each of which comprises a single string (<ID>).

In the present embodiment this is displayed to the user as a tree like structure such as that provided by the JTree GUI component in Java. The user can amend the dictionary using the GUI by selecting to add an additional node to the dictionary in the appropriate place (i.e. so as to be a sub-node of a main node corresponding to the appropriate concept or attribute of the ontology.

The system also enables the user to access an individual mapping table directly in case a complex transformation is required for a successful mapping, in which case the user can enter this directly into the mapping table/transformation table.

Once the mapping is available, it is straightforward for the wrapper to either translate XQuery queries tointo a form appropriate for querying the XML repository directly (to obtain an answer to a single query). Alternatively, the wrapper can generate translated XML schema's corresponding to the XML schemas of the underlying resource and these can be used by the processor 30 to generate the integrated business view of the underlying resources, etc.

## Claims

1. An interface device for interfacing between one or more underlying data resources comprising a plurality of electronic data files arranged in accordance with a common format and a processing system, the interface device including storage means for storing one or more mappings between meta data tag names associated with the data files of the underlying data resource and corresponding meta data or tag names used in the data processing system.

2. An interface device according to claim 1 wherein the data processing system is an ontology based data processing system and the storage means stores mappings between meta data tag names associated with the underlying data resource and concept or attribute names of an ontology used in the ontology based data processing system.

3. An interface device according to claim 1 or 2 wherein the electronic data files accord to the eXtensible Mark-up Language (XML) protocol.

4. An interface device according to any one of the preceding claims further comprising:

   a dictionary store storing a set of dictionary data comprising a one to many set of mappings in which at least one record maps a single meta data or tag name used in the data processing system to a plurality of meta data tag names associated with a corresponding plurality of underlying data resources; and
   processing means for comparing each type of electronic data file, or each file describing format information about a respective type of electronic data file, with the dictionary data to generate a corresponding mapping in respect of each type of electronic data file.

5. A method of interfacing between one or more underlying data resources comprising a plurality of electronic data files arranged in accordance with a common format and a processing system, the method including:

storing one or more mappings between meta data tag names associated with the data files of the underlying data resource and corresponding meta data or tag names used in the data processing system; and
using the stored mappings to translate data and or access requests between the underlying data resources and the processing system.

6. A method according to claim 5 wherein the data processing system is an ontology based data processing system and the storing step comprises storing mappings between meta data tag names associated with the underlying data resource and concept or attribute names of an ontology used in the ontology based data processing system.

7. A method according to claim 5 or 6 wherein the electronic data files accord to the extensible Mark-up Language (XML) protocol.

8. A method according to any of claims 5 to 7 further comprising:

storing a set of dictionary data comprising a one to many set of mappings in which at least one record maps a single meta data or tag name used in the data processing system to a plurality of meta data tag names associated with a corresponding plurality of underlying data resources; and
comparing each type of electronic data file, or each file describing format information about a respective type of electronic data file, with the dictionary data to generate a corresponding mapping in respect of each type of electronic data file.

9. Processor implementable instructions for causing a digital processor to carry out the method of any one of claims 5 to 8.

10. Carrier means carrying the processor implementable instructions of claim 10.

Figure 1

**Customer**
    -name: Name
    -address: Address
    -telephone: Telephone
    -has-product: Product

| c-id | name | address | telephone | pid |
|------|------|---------|-----------|-----|
|      |      |         |           |     |

**Telephone**
    - has-number: string
    - has-area-code: code

The area code is filled in by post condition of the transformation if necessary.

Figure 2

**Product**
    -name: string
    -model: string
    -has-description: string

| pid | name | model | description | date |
|-----|------|-------|-------------|------|
|     |      |       |             |      |

Figure 3

Figure 4

Figure 5

Figure 6

## EUROPEAN SEARCH REPORT

European Patent Office

Application Number

EP 06 25 5593

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/101170 A1 (EDELSTEIN JOSEPH [IL] ET AL) 29 May 2003 (2003-05-29) * paragraphs [0018], [0019] * * paragraphs [0054] - [0142]; figures 6,8,13,14; tables I-XVII * | 1-10 | INV. G06F17/30 |
| X | EP 1 260 916 A2 (UNICORN SOLUTIONS INC [US]) 27 November 2002 (2002-11-27) * paragraphs [0034] - [0045] * * paragraphs [0087] - [0091] * * paragraphs [0135] - [0145]; figure 5 * | 1-10 | |
| X | US 2005/234889 A1 (FOX JOSHUA [IL] ET AL) 20 October 2005 (2005-10-20) * abstract * * paragraph [0010] * * paragraphs [0031] - [0037]; figures 1,2 * | 1-10 | |
| X | EP 1 684 192 A (ONTOPRISE GMBH [DE]; SOFTWARE AG [DE]) 26 July 2006 (2006-07-26) * abstract * * paragraphs [0007] - [0048] * | 1-10 | TECHNICAL FIELDS SEARCHED (IPC) G06F |

The present search report has been drawn up for all claims

| Place of search | Date of completion of the search | Examiner |
|---|---|---|
| Berlin | 19 January 2007 | Siodmok, Wojciech |

EPO FORM 1503 03.82 (P04C01)

## ANNEX TO THE EUROPEAN SEARCH REPORT
## ON EUROPEAN PATENT APPLICATION NO.

EP 06 25 5593

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2007

| Patent document cited in search report | | Publication date | Patent family member(s) | | Publication date |
|---|---|---|---|---|---|
| US 2003101170 | A1 | 29-05-2003 | US | 2005149484 A1 | 07-07-2005 |
| EP 1260916 | A2 | 27-11-2002 | US<br>US<br>US<br>US | 2004216030 A1<br>2006167946 A1<br>2003163597 A1<br>2003179228 A1 | 28-10-2004<br>27-07-2006<br>28-08-2003<br>25-09-2003 |
| US 2005234889 | A1 | 20-10-2005 | NONE | | |
| EP 1684192 | A | 26-07-2006 | CN<br>US | 1811772 A<br>2006167856 A1 | 02-08-2006<br>27-07-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02080028 A
- WO 02080026 A

- WO 06103398 A

**Non-patent literature cited in the description**

- **PATRICK ZIEGLER ; KLAUS R. DITTRICH.** *Three Decades of Data Integration - All Problems Solved,* 2004, 3-12